## Europäisches Patentamt

(19) **European Patent Office**

**Office européen des brevets**

(11) Veröffentlichungsnummer: **0 199 922**
**A2**

(12) # EUROPÄISCHE PATENTANMELDUNG

(21) Anmeldenummer: **86102299.4**

(22) Anmeldetag: **21.02.86**

(51) Int. Cl.⁴: **B 06 B 1/16**
**E 02 D 7/18**

(30) Priorität: **02.05.85 DE 3515690**

(43) Veröffentlichungstag der Anmeldung:
**05.11.86 Patentblatt 86/45**

(84) Benannte Vertragsstaaten:
**AT BE CH FR GB IT LI NL SE**

(71) Anmelder: **Gebr. Lindenmeyer GmbH & Co.**
**Maschinenfabrik**
**Beethovenstrasse 11**
**D-8906 Gersthofen(DE)**

(72) Erfinder: **Falch, Herman**
**Schubertstrasse 13**
**D-8906 Gersthofen(DE)**

(74) Vertreter: **Liebau, Gerhard, Dipl.-Ing.**
**Birkenstrasse 39 Postfach 22 02 29**
**D-8900 Augsburg 22(DE)**

(54) **Vibrationsbär mit Umwuchtverstellung.**

(57) Bei einem Vibrationsbär zum Rammen und/oder Ziehen von Rammkörpern werden wenigstens zwei Unwuchtrotoren (2, 3) durch mindestens einen Motor und ein Getriebe (34, 35) synchron und gegenläufig angetrieben. Jeder der beiden Unwuchtrotoren (2, 3) besteht aus zwei auf konzentrisch zueinander angeordneten Wellen gleichläufig angetriebenen und mittels einer Verstelleinrichtung winkelmäßig relativ zueinander verstellbaren Unwuchtrotoren (4, 5 bzw. 6, 7). Jeweils die ersten Unwuchtmassen (4, 6) beider Unwuchtrotoren (2, 3) sind über einen ersten Zahnrädersatz gegenläufig zueinander und jeweils die zweiten Unwuchtmassen (5, 7) über einen zweiten Zahnrädersatz (34, 35) gegenläufig zueinander antreibbar. Zumindest der eine Unwuchtrotor (2) ist nach Art eines Drehkolben-Stellantriebes ausgebildet. Hierbei sind beide Unwuchtmassen (4, 5) in einem zylindrischen, geschlossenen Gehäuse (8) angeordnet, wobei die erste Unwuchtmasse (4) den mit dem Gehäuse (8) fest verbundenen, radialen Steg bildet und die zweite Unwuchtmasse (5) den in dem Gehäuse (8) begrenzt drehbaren, gegenüber dem Gehäuse (8) und dem Steg (5) abgedichteten radialen Flügel. Jede der beiden zwischen Flügel (5) und Steg (4) gebildeten Kammern (15, 16) ist über eine eigene Steuerleitung wechselweise mit Hydraulikflüssigkeit beaufschlagbar.

FIG. 1.

0199922

## Vibrationsbär mit Unwuchtverstellung.

Die Erfindung betrifft einen Vibrationsbär zum Rammen und/
oder Ziehen von Rammkörpern mit wenigstens zwei durch mindestens einen Motor und Getriebe synchron gegenläufig angetriebenen, parallel zueinander gelagerten Unwuchtrotoren,
von denen jeder aus zwei auf zueinander konzentrischen
Wellen angeordneten, gleichläufig angetriebenen und mittels
einer Verstelleinrichtung winkelmäßig relativ zueinander
verstellbaren Unwuchtmassen besteht, wobei jeweils die
ersten Unwuchtmassen beider Unwuchtrotoren über einen
ersten Zahnrädersatz gegenläufig zueinander und jeweils
die zweiten Unwuchtmassen über einen zweiten Zahnrädersatz
gegenläufig zueinander antreibbar sind.

Bekannte Vibrationsbären dieser Art (DE-OS 29 32 287)
bieten den Vorteil, das aus den beiden Unwuchtmassen jedes
Unwuchtrotors resultierende statische Moment während des
Betriebes einstellen zu können. Auf diese Weise kann beim
Rammbetrieb der Vibrationsbär dem Rammgut und den Bodenverhältnissen optimal angepaßt werden. Leichtes Rammgut
erfordert kleine, schweres Rammgut große Fliehkräfte,
röllige Böden hohe und bindige Böden niedrige Rammfrequenzen. Die Veränderbarkeit des statischen Moments ermöglicht
es, die Eigenresonanz des Bodens zu suchen und danach das
statische Moment so reduzieren zu können, daß im Umfeld
des Arbeitsbereiches unerwünschte Erschütterungen vermieden werden. Desweiteren kann durch die Verstellbarkeit
der Unwuchtmassen zueinander die Amplitude dem Arbeitsvorgang angepaßt werden. So arbeitet man z.B. beim Rammen
mit einer größeren Aplitude als beim Ziehen.

Bei dem bekannten Vibrationsbär der oben genannten Art
ist zur winkelmäßigen Relativverstellung der beiden Unwuchtmassen jedes Unwuchtrotors eine Verstelleinrichtung
vorgesehen, die zur Veränderung der Phasenlage der die erste Unwuchtmasse tragenden Welle gegenüber der anderen, die zweite Unwuchtmasse tragenden Welle dient. Die Verstelleinrichtung bildet einen Bestandteil eines Planetenradgetriebes, dessen mit dem das Sonnenrad bildenden Zahnkranz der zu verdrehenden Welle kämmendes Planetenrad das Antriebsrad dieser Welle bildet, das zur Veränderung der Phasenlage dieser Welle relativ zu der anderen Welle entlang eines zur letzteren konzentrischen Kreises verstellbar ist. Abgesehen davon, daß ein derartiges Verstellgetriebe verhältnismäßig kompliziert und damit teuer im Aufbau ist, hat sich in der Praxis herausgestellt, daß zwischen den beiden einander zugeordneten Unwuchtmassen Stellkräfte entstehen können, die sehr hoch sind und in Abhängigkeit von der Stellphase und der Drehzahl ungefähr bis zu einem Zehnfachen der Antriebskraft betragen können. Diese hohen Stellkräfte führen zu Schäden im Verstellgetriebe, hauptsächlich zu Lagerschäden und anderen Schäden, die nicht beherrschbar sind. Außerdem ist das Verstellgetriebe einem Verschleiß unterworfen.

Der Erfindung liegt deshalb die Aufgabe zugrunde, einen Vibrationsrammbär der eingangs erwähnten Art zu schaffen, der einfach im Aufbau ist und verschleißarm sowie betriebssicher arbeitet und bei dem vor allem die Verstelleinrichtung eine hohe Lebensdauer aufweist.

Dies wird nach der Erfindung dadurch erreicht, daß zumindest einer der Unwuchtrotoren nach Art eines Drehkolben-Stellantriebes ausgebildet ist und hierbei beide Unwuchtmassen in einem zylindrischen, geschlossenen Gehäuse angeordnet sind, wobei die erste Unwuchtmasse den mit dem Gehäuse fest verbundenen, radialen Steg bildet, und die zweite Unwuchtmasse den in dem Gehäuse begrenzt drehbaren, gegenüber dem Gehäuse und dem Steg abgedichteten, radialen Flügel bildet, und wobei jede der beiden zwischen Flügel und Steg gebildeten Kammer über eine eigene Steuerleitung wechselweise mit der Hydraulikflüssigkeit beaufschlagbar ist.

Die Erfindung geht also von dem Gedanken aus, die Unwuchtmassen direkt in die Verstelleinrichtung zu integrieren, so daß sie Teile eines Drehkolben-Stellantriebes bilden. Damit werden die Stellkräfte dort aufgenommen und übertragen, wo sie entstehen und es sind keine Zwischenglieder zwischen Aktionspunkt und Reaktionspunkt vorhanden. In bestimmten Stellphasen und bei Drehzahlen, bei denen sonst hohe Stellkräfte auftreten, die bei bekannten Vibrationsbären über das separate Verstellgetriebe übertragen werden mußten, überträgt bei dem neuen Vibrationsbär eine Unwuchtmasse ihre Energie über die Hydraulikflüssigkeit direkt auf die andere Unwuchtmasse. Der Verstellantrieb ist damit keinen unvorhersehbaren großen Belastungen ausgesetzt, er arbeitet damit betriebssicher, verschleißfrei und weist infolgedessen auch eine hohe Lebensdauer auf. Im übrigen zeichnet sich der neue Vibrationsbär durch einen sehr einfachen Aufbau aus.

Vorteilhafte Ausgestaltungen der Erfindung sind in den Unteransprüchen gekennzeichnet.

Die Erfindung ist in folgendem, anhand von in der Zeichnung dargestellten Ausführungsbeispieles näher erläutert. Es zeigen:

Figur 1 einen vertikalen Querschnitt eines ersten Ausführungsbeispieles nach der Linie I-I der Figur 2,

Figur 2 einen horizontalen Schnitt nach der Linie II-II der Figur 1,

Figur 3 einen vertikalen Schnitt mit einer Stellung der Unwuchtmassen zur Erzeugung eines maximalen statischen Momentes,

Figur 4 eine Stellung der Unwuchtmassen zur Erzeugung
eines minimalen statischen Momentes,
Figur 5 eine schematische Darstellung eines zweiten Ausführungsbeispieles.

In der Zeichnung ist mit 1 das Getriebegehäuse des Vibrationsbärs bezeichnet. In diesem sind parallel zueinander
zwei Unwuchtrotoren 2, 3 gelagert, die synchron und gegenläufig antreibbar sind. Jeder der beiden Unwuchtrotoren
2, 3 besteht aus zwei Unwuchtmassen 4 und 5 bzw. 6 und 7.

Der Unwuchtrotor 2 ist nach Art eines Drehkolben-Stellantriebes ausgebildet. Die beiden Unwuchtmassen 4, 5 sind
in einem zylindrischen, geschlossenen Gehäuse 8 angeordnet. Die erste Unwuchtmasse 4 bildet einen radialen Steg
und ist mit dem Gehäuse 8 fest verbunden. Das Gehäuse 8
ist mittels der Hohlwelle 9 und der Lager 10 im Getriebegehäuse 1 drehbar gelagert. Die zweite Unwuchtmasse 5
ist mit der konzentrisch in der Hohlwelle 9 drehbar gelagerten inneren Welle 11 fest verbunden und bildet einen
radialen Flügel. Dichtungen 12, 13 und 14 dichten die
Unwuchtmasse 5 gegenüber dem zylindrischen Gehäuse 8 und
der ersten Unwuchtmasse 4 ab, so daß in dem Gehäuse 8
zwei voneinander getrennte Kammern 15, 16 gebildet sind.
In die innere Welle 11 münden an beiden Stirnseiten
Steuerleitungen 17, 18, die mit dem Getriebegehäuse 1
verbunden und je über eine Wellendichtung 19 gegenüber
der Welle 11 abgedichtet sind. Über eine in der Welle
11 vorgesehene Axialbohrung 20 und eine Querbohrung 21
steht die Steuerleitung 17 mit der Kammer 15 in Verbindung, während die Steuerleitung 18 über eine Axialbohrung
22 und eine Querbohrung 23 mit der Kammer 16 verbunden
ist. Über das Steuerventil 24 und die beiden Steuerleitungen 17, 18 können die beiden Kammern 15, 16 wechselweise mit Hydraulikflüssigkeit beaufschlagt werden.

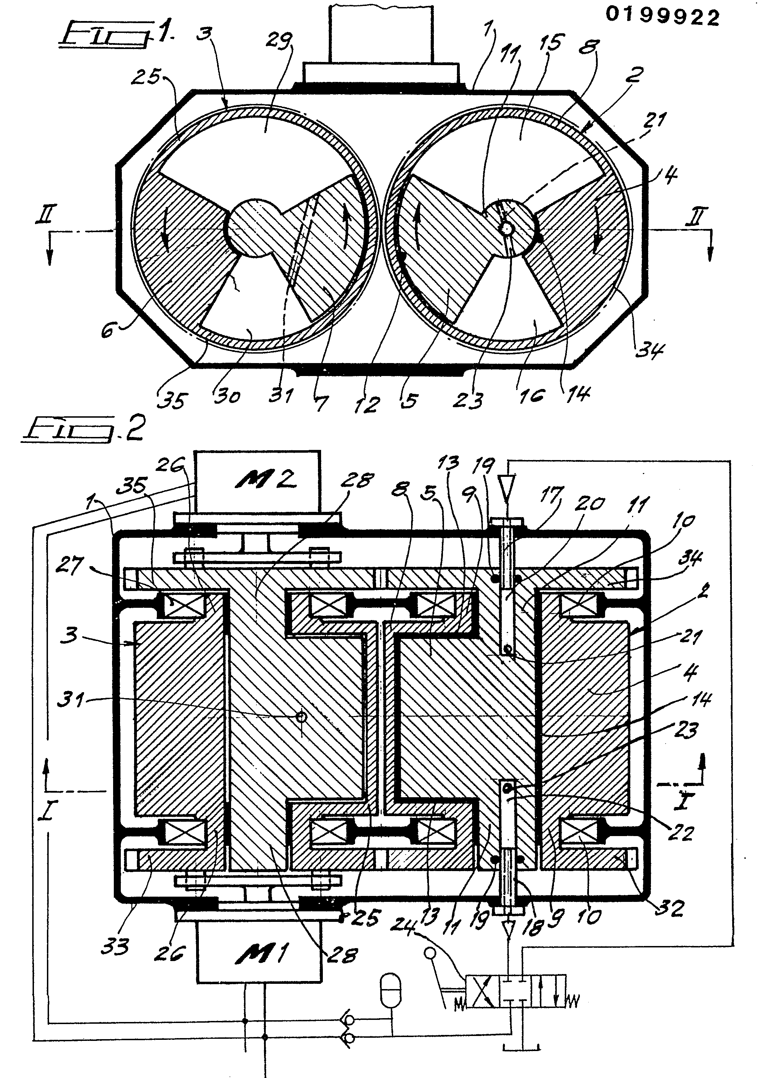

Zweckmäßig ist jede Unwuchtmasse 4, 5 im Querschnitt sektorförmig ausgebildet. Eine optimale Verteilung der Unwuchtmassen 4, 5 wird dann erreicht, wenn sich jede der Unwuchtmassen, wie es in den Zeichnungen,Figuren 1, 3 und 4,dargestellt ist, über einen viertel Kreis erstreckt.

Der zweite Unwuchtrotor 3 könnte im Prinzip genauso ausgestaltet sein wie der Unwuchtrotor 2. Da jedoch die Unwuchtmassen beider Unwuchtrotoren 2, 3 ohnehin über Zahnradsätze miteinander drehfest verbunden sind, wie nachstehend noch näher ausgeführt wird, braucht der zweite Unwuchtrotor selbst nicht als Verstelleinrichtung ausgebildet zu sein, sondern es genügt, wenn man ihn gleichartig wie den ersten Unwuchtrotor 2 ausbildet. Die gleichartige Ausgestaltung ist deshalb erforderlich, damit beim zweiten Unwuchtrotor 3 in jedem Betriebszustand eine Verteilung und Größe der Unwuchtmassen 6, 7 erreicht wird, die denen der Unwuchtmassen 4, 5 entsprechen. Im übrigen werden auch die Herstellungskosten gesenkt, wenn man für den zweiten Unwuchtrotor 3 Teile verwendet, die denen des ersten Unwuchtrotors 2 entsprechen.

Demnach weist der zweite Unwuchtrotor 3 ebenfalls ein zylindrisches, geschlossenes Gehäuse 25 auf, welches über die Hohlwelle 26 und die Lager 27 im Getriebegehäuse 1 drehbar gelagert ist. Mit dem zylindrischen Gehäuse 25 ist die sektorförmig ausgebildete erste Unwuchtmasse 6 fest verbunden. Die zweite Unwuchtmasse 7 ist mit der inneren Welle 28 fest verbunden, die in der Hohlwelle 26 drehbar gelagert ist. Auch die zweite Unwuchtmasse 7 ist sektorförmig ausgebildet. Im Gegensatz zu der Ausgestaltung des ersten Unwuchtrotors 2 fehlen jedoch bei der zweiten Unwuchtmasse 7 des zweiten Unwuchtrotors 3 die Abdichtungen der Unwuchtmasse 7 gegenüber dem Gehäuse 25 und auch gegenüber der Unwuchtmasse 6.

Um im zweiten Unwuchtrotor 3 jeweils die gleiche Massenverteilung zu schaffen wie im ersten Unwuchtrotor 2, sind die Kammern 29, 30 des zweiten Unwuchtrotors 3 ebenfalls mit Hydraulikflüssigkeit gefüllt. Eine Verbindungsbohrung 31 in der Unwuchtmasse 7 verbindet die beiden Kammern 29, 30 miteinander, so daß Hydraulikflüssigkeit ungehindert von einer Kammer in die andere überströmen kann.

Mit der Hohlwelle 9 ist das Zahnrad 32 verbunden, welches mit dem auf der Hohlwelle 26 angeordneten Zahnrad 33 kämmt. Das Zahnrad 33 bzw. die Hohlwelle 26 wird von dem Hydromotor M1 angetrieben. Auf diese Weise werden die ersten Unwuchtmassen 4, 6 gegenläufig zueinander und synchron angetrieben. Ebenso ist die innere Welle 11 mit einem Zahnrad 34 verbunden, welches mit dem Zahnrad 35 kämmt, das auf der inneren Welle 28 angeordnet ist und von einem zweiten Hydromotor M2 angetrieben wird. Auch die beiden zweiten Unwuchtmassen 5, 7 werden also gegenläufig zueinander angetrieben. Beide Hydromotoren M1 und M2 werden synchron zueinander und in der gleichen Drehrichtung angetrieben, so daß sich die Unwuchtmassen 4, 5, wie mit den Pfeilen angedeutet, gemeinsam im Uhrzeigersinn drehen, während die beiden Unwuchtmassen 6, 7 des anderen Unwuchtrotors 3 sich gemeinsam gegen den Uhrzeigersinn drehen.

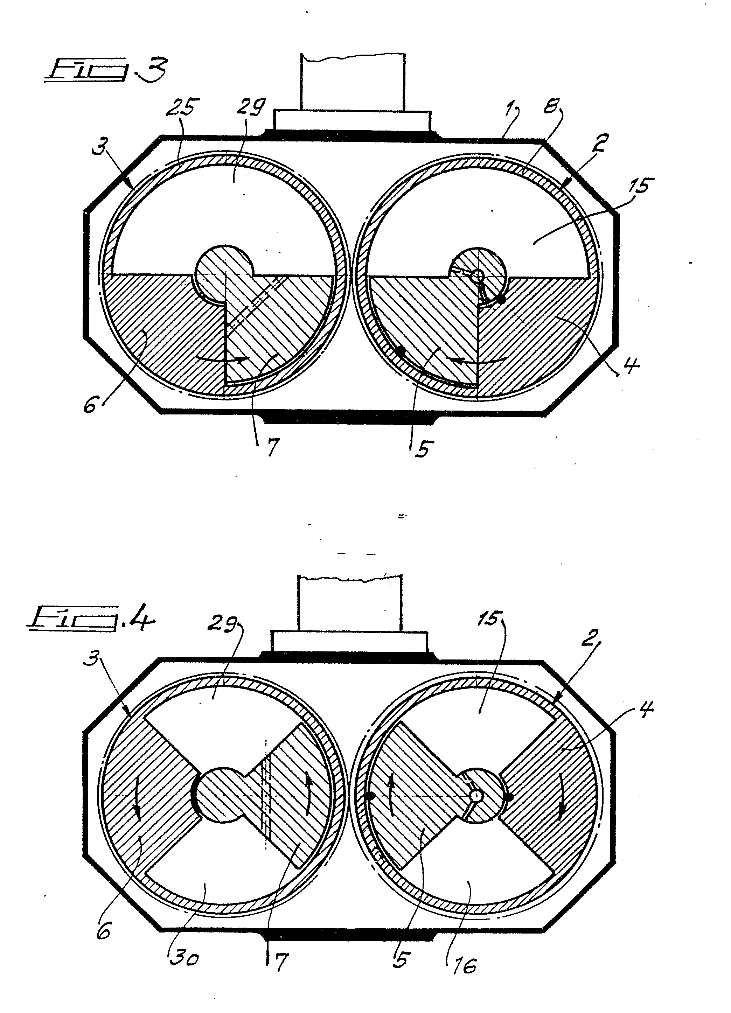

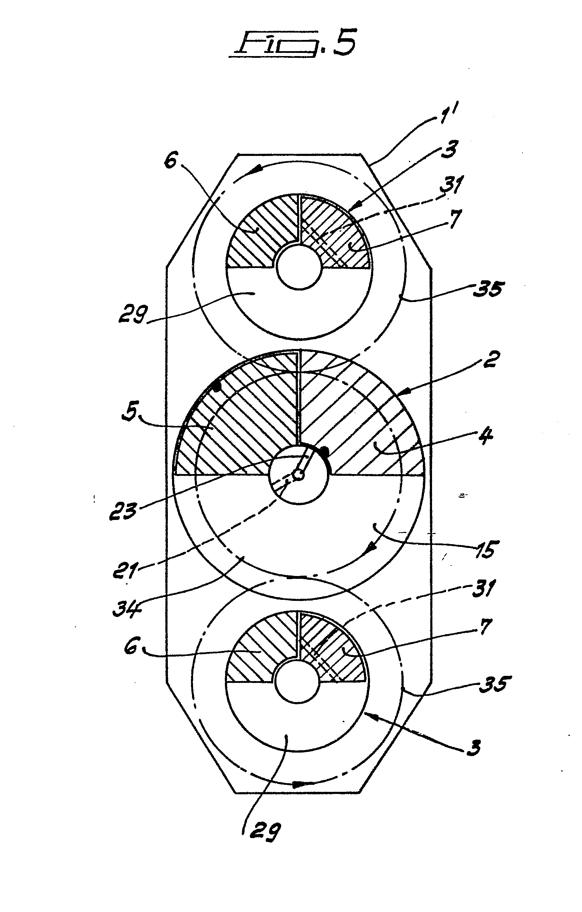

Die Winkelverstellung der Unwuchtmassen 4, 5 des Unwuchtrotors 2 relativ zueinander kann sowohl während des Betriebes als auch im Stillstand erfolgen. Hierzu wird beispielsweise über das Ventil 24 und die Steuerleitung 17 Hydraulikflüssigkeit in die Kammer 15 eingeleitet, während gleichzeitig aus der Kammer 16 über die Steuerleitung 18 Hydraulikflüssigkeit austritt. Je mehr sich die beiden Unwuchtmassen 4, 5 einander nähern, desto größer wird das statische Moment, welches bei vollständiger Annäherung der beiden Unwuchtmassen 4, 5, wie es in Figur 3 dargestellt ist, sein Maximum erreicht hat. Wird umgekehrt in die Kammer 16 Hydraulikflüssigkeit eingeleitet, dann werden die beiden Unwuchtmassen 4, 5 in entgegengesetzter Richtung zueinander verdreht. Liegen sie einander diametral gegenüber, so wie es in Figur 4 dargestellt ist, dann heben sich die Fliehkräfte beider Unwuchtmassen gegeneinander auf und es wird ein minimales statisches Moment erreicht. Zwischen den in Figur 3 und 4 dargestellten Extremstellungen ist jede Zwischenstellung über das Ventil 24 hydraulisch sowohl während des Betriebes als auch während des Stillstandes einstellbar. Die Unwuchtmassen 6, 7 des zweiten Unwuchtrotors 3 werden über die Zahnradsätze 32, 33 bzw. 34, 35 jeweils im gleichen Sinne gegeneinander verstellt, wie die Unwuchtmassen 4, 5.

In Figur 5 ist ein weiteres Ausführungsbeispiel des erfindungsgemäßen Vibrationsbärs dargestellt. Diese Ausführungsform hat den Vorteil, daß sie in horizontaler Richtung besonders schmal baut. Bei dieser Ausführungsform sind in einem Getriebegehäuse 1' drei Unwuchtrotoren 2, 3 vertikal übereinander angeordnet. Die Ausgestaltung dieser Unwuchtrotoren 2, 3 entspricht der Ausgestaltung der Unwuchtrotoren 2, 3 des oben beschriebenen Ausführungsbeispieles gemäß den Figuren 1 - 4. Es wurden deshalb auch die gleichen Bezugszeichen verwendet und obige Beschreibung trifft sinngemäß zu. Der Unterschied zu dem vorhergehend beschriebenen Ausführungsbeispiel besteht darin, daß die Unwuchtmassen der einzelnen Unwuchtrotoren nicht alle gleich groß ausgebildet sind.

Bei dem in Figur 5 dargestellten Ausführungsbeispiel ist der mittlere Unwuchtrotor 2 nach Art eines Drehkolben-Stellantriebes ausgebildet. Er entspricht in allen Einzelheiten dem Unwuchtrotor 2 des anhand der Figuren 1 und 2 näher beschriebenen Unwuchtrotors 2. Die beiden äußeren Unwuchtrotoren 3 entsprechen in ihren Einzelheiten ebenfalls dem Unwuchtrotor 3 des Ausführungsbeispieles gemäß den Figuren 1 und 2. Jede Unwuchtmasse 6, 7 der beiden äußeren Unwuchtrotoren 3 ist bei dem in Figur 5 dargestellten Ausführungsbeispiel halb so schwer, wie jede Unwuchtmasse 4, 5 des mittleren Unwuchtrotors 2. Über einen Zahnradsatz 34, 35 werden die Unwuchtmassen 7 gegenläufig zu der Unwuchtmasse 5 angetrieben. Das gleiche gilt bezüglich der äußeren Unwuchtmassen 6 in Bezug auf die innere Unwuchtmasse 4. Die Antriebsmotoren greifen zweckmäßig an den Wellen der beiden äußeren Unwuchtrotoren 3 an, ähnlich wie es bei dem vorhergehenden Ausführungsbeispiel auch der Fall ist. Figur 5 zeigt die Unwuchtmassen 4, 5 bzw. 6, 7 in einer Stellung zur Erzeugung eines maximalen statischen Momentes. Werden die beiden Unwuchtmassen 4, 5 in der oben beschriebenen Weise in eine Stellung gebracht, in welcher sie um 180° versetzt genau einander gegenüberstehen, so gelangen auch die Unwuchtmassen 6, 7 infolge der Zahnradsätze in eine derartige gegenüberstehende Stellung. In dieser Stellung wird dann ein minimales statisches Moment erzeugt.

Patentansprüche

1. Vibrationsbär zum Rammen und/oder Ziehen von Rammkörpern mit wenigstens zwei durch mindestens einen Motor und Getriebe synchron gegenläufig angetriebene, parallel zueinander gelagerte Unwuchtrotoren, von denen jeder aus zwei auf zueinander konzentrischen Wellen angeordneten, gleichläufig angetriebenen und mittels einer Verstelleinrichtung winkelmäßig relativ zueinander verstellbaren Unwuchtmassen besteht, wobei jeweils die ersten Unwuchtmassen beider Unwuchtrotoren über einen ersten Zahnrädersatz gegenläufig zueinander und jeweils die zweiten Unwuchtmassen über einen zweiten Zahnrädersatz gegenläufig zueinander antreibbar sind, dadurch gekennzeichnet, daß zumindest einer (2) der Unwuchtrotoren (2, 3) nach Art eines Drehkolben-Stellantriebes ausgebildet ist und hierbei beide Unwuchtmassen (4,5) in einem zylindrischen, geschlossenen Gehäuse (8) angeordnet sind, wobei die erste Unwuchtmasse (4) den mit dem Gehäuse (8) fest verbundenen, radialen Steg bildet, die zweite Unwuchtmasse (5) den in dem Gehäuse (8) begrenzt drehbaren, gegenüber dem Gehäuse (8) und dem Steg (4) abgedichteten, radialen Flügel bildet und wobei jede der beiden zwischen Flügel (5) und Steg (4) gebildeten Kammern (15, 16) über eine eigene Steuerleitung (17, 18) wechselweise mit Hydraulikflüssigkeit beaufschlagbar ist.

2. Vibrationsbär nach Anspruch 1, dadurch gekennzeichnet, daß jede Unwuchtmasse (4 - 7) im Querschnitt sektorförmig ausgebildet ist.

3. Vibrationsbär nach Anspruch 2, dadurch gekennzeichnet, daß sich jede Unwuchtmasse (4 - 7) über einen viertel Kreis erstreckt.

4. Vibrationsbär nach Anspruch 1, dadurch gekennzeichnet, daß die den Flügel bildende Unwuchtmasse (5) mit einer inneren Welle (11) verbunden ist, in welcher Bohrungen (20 - 23) für die Hydraulikflüssigkeit vorgesehen sind, wobei die Steuerleitungen (17, 18) stirnseitig in die Welle (11) münden und über Wellendichtungen (19) gegenüber dieser abgedichtet sind.

5. Vibrationsbär nach den Ansprüchen 1 - 3, dadurch gekennzeichnet, daß der zweite Unwuchtrotor (3) gleichartig ausgebildet ist wie der erste Unwuchtrotor (2) und daß beim zweiten Unwuchtrotor (3) hiervon abweichend die beiden Kammern (29, 30) unter Weglassung der beiden Steuerleitungen durch eine Verbindungsbohrung (31) oder dgl. miteinander verbunden sind.

6. Vibrationsbär nach Anspruch 5, dadurch gekennzeichnet, daß der oder die Motoren (M1, M2) an der oder den Wellen (26, 28) des zweiten Unwuchtrotors (3) angreifen.

7. Vibrationsbär nach mindestens einem der Ansprüche 1 - 5, dadurch gekennzeichnet, daß drei Unwuchtrotoren (2, 3) in einem Getriebegehäuse (1') vertikal übereinander angeordnet sind, von denen der mittlere Unwuchtrotor (2) nach Art eines Drehkolben-Stellantriebes ausgebildet ist, wobei jede Unwuchtmasse (6, 7) der beiden äußeren Unwuchtrotoren (3) halb so schwer ist wie jede Unwuchtmasse (4, 5) des mittleren Unwuchtrotors (2). (Figur 5)

8. Vibrationsbär nach Anspruch 7, dadurch gekennzeichnet, daß der oder die Motoren an den Wellen der beiden äußeren Unwuchtrotoren (3) angreifen.

Fig. 1.

Fig. 2

FIG.3

FIG.4

## FIG.5